# EUROPEAN PATENT SPECIFICATION

(11) **EP 0 822 165 B1**
(45) Date of publication and mention of the grant of the patent: **26.05.2004**
(21) Application number: 97202361.8
(22) Date of filing: 28.07.1997
(51) Int. Cl.: C02F 3/30

(54) **Method for the treatment of waste water**
Abwasserreinigungsverfahren
Procédé pour le traitement des eaux usées

(30) Priority: 31.07.1996 NL 1003711
(43) Date of publication of application: 04.02.1998
(73) Proprietor: Haskoning Nederland B.V., 6500 AD Nijmegen (NL); Waterschap Groot Salland, 8025 AL Zwolle (NL)
(72) Inventor: Brandse, Frank Arie, 8017 LA Zwolle (NL); de Vries, Antonie Cornelis, 8265 CK Kampen (NL)
(74) Representative: De Hoop, Eric

(56) References cited:
- DE-A- 4 100 685
- NL-A- 9 401 806
- US-A- 5 380 438
- US-A- 5 393 427
- PATENT ABSTRACTS OF JAPAN vol. 016, no. 437 (C-0984), 11 September 1992 & JP 04 151000 A (MEIDENSHA CORP), 25 May 1992, & DATABASE WPI Section Ch, Week 9227 Derwent Publications Ltd., London, GB; Class D15, AN 92-223744 & JP 04 151 000 A (MEIDENSHA CORP) 25 May 1992
- J.J. VAN RIEL: "Het modified Renphosysteem" DOCTORAALVERSLAGEN VAKGROEP MILIEUTECHNOLOGIE, LANDBOUWUNIVERSITEIT, vol. 94, no. 5, July 1994, WAGENINGEN NL, XP002028379
- KUBA T. ET AL: 'PHOSPHORUS AND NITROGEN REMOVAL WITH MINIMAL COD REQUIREMENT BY INTEGRATION OF DENITRIFYING DEPHOSPHATATION AND NITRIFICATION IN A TWO-SLUDGE SYSTEM' WATER RESEARCH vol. 30, no. 7, 01 July 1996, pages 1702 - 1710

## Description

The invention relates to a method for the treatment of waste water as described in the preamble of claim 1. Such a method is known from Water Research Vol. 30, No 7, pp. 1702-1710, 1996.

It is known, for example, how to treat domestic or industrial waste water with the aid of various chemical and biological processes. In these processes the waste water is treated, for example, by adding purifying chemicals, so that the polluting components in the water are bound and can then be precipitated, for example. The treated water or effluent is then discharged to the surface water.

As much nitrogen and phosphates as possible should be removed from the water, in order to prevent surface water containing too many nutrients for microorganisms. An excess of nitrogen and phosphates leads to eutrophication of surface water, as a result of which the growth of microorganisms in the water increases to such an extent that no oxygen is left for other forms of life and the ecological equilibrium in the water is seriously disturbed.

In order to prevent this, more and more frequent use is being made of biological processes in which microorganisms remove polluting components, particularly nitrogen and phosphates, from the waste water. These biological processes are for example performed under conditions which are successively anaerobic, anoxic or aerobic.

Aerobic processes take place in aeration tanks, for example. In these aerobic processes nitrogen and nitrogen compounds such as NH₄⁺ from the waste water are converted into nitrates and pollution - expressed in biochemical oxygen consuming units, or BOCs, or, depending on the method of determination, COCs - is removed from the waste water by breaking down or binding these BOCs to the microorganisms with the aid of oxygen.

The nitrates formed are then removed again in an anoxic process with the aid of microorganisms. An anoxic process takes place in a low-oxygen but nitrate-containing environment in which phosphate-accumulating bacteria can also take up large amounts of phosphates from the waste water, with the nitrate serving as an oxygen source for the bacteria. In this way phosphate is removed from the waste water and fixed in sludge, and nitrates are removed.

Anaerobic processes also take place in a low-oxygen environment which is also low in nitrates. As a result of the fact that little oxygen is present in the anaerobic environment, reduction processes can also give rise to fatty acids which are taken up by the bacteria, with the energy needed for this being obtained by releasing the intracellularly stored phosphates to the water. The phosphate-rich water thus obtained can also be purified with the aid of chemicals which bind and precipitate the phosphates.

The number of times and the order in which the waste water goes through the processes is inter alia dependent on the degree and nature of the pollution of the waste water.

In the treatment processes known hitherto, the various processes usually take place in a single digester. For this purpose a circulation system is often used in which the biochemical processes take place at the same time. The conditions in a mixed system of this type are difficult to control, as a result of which the degree of purification which can be achieved is not entirely satisfactory. Chemicals are usually used in addition in order to achieve the required degree of purification. These requirements, however, are becoming more and more stringent in the various countries, while the use of chemicals is undesirable because of their negative effect on the quality of the water and the sludge produced.

The object of the invention is a process for the treatment of waste water in which the various processes each take place in separate digesters, with the processes being integrated and attuned to each other in such a way that the best possible purification takes place at the lowest possible costs, preferably in a single-sludge system in which the water goes through all the processes in a single main stream.

This object of the invention is achieved by a method according to claim 1.

It has been found that DPBs, or Denitrifying Phosphorus Removing Bacteria, thrive both under aerobic and under anoxic or anaerobic conditions, so that the respective processes are gone through in an efficient way with the aid of these bacteria and a high degree of purification can be achieved. DPBs can release phosphates under anaerobic conditions and take up phosphates both under denitrifying conditions and under oxygen-rich conditions. The use of DPBs has important advantages. One important advantage is that less COD is needed for the removal of nitrogen and phosphates. The energy consumption, particularly for aeration, and the sludge production are also lower.

It has been found that very good conditions for the population of denitrifying dephosphorylating bacteria are obtained as a result of the low-nitrate return flow from the anoxic processes to the anaerobic processes.

Because part of the sludge water which has gone through the aerobic processes is returned to the anoxic process, an extensive circulation of the sludge water arises and the nitrate content of the water is greatly reduced. The mixing of the aerobic sludge water with the sludge water originating from the contact tank creates conditions in which there is almost no unbound oxygen left and in which the content of nitrates and BOCs in the anoxic digester is high. As a result of these conditions there is optimal nitrate removal and phosphate removal by the DPBs. Apart from DPBs, other denitrifying microorganisms also play a rôle in the denitrification, with nitrate being converted to nitrogen gas which escapes from the waste water.

By means of the variable digester the equilibrium achieved between the various processes can be maintained in an optimal manner even at times of peak loads. Under ordinary conditions the variable digester will be used as an anoxic digester. At peak loads, however, the treatment plant receives greater quantities of waste waste for processing, as a result of which the sludge water would go through the aerobic process (in which nitrogen and BOCs are oxidized) too quickly for optimum purification. In order to prevent this, the operation of the variable digester is switched from anoxic digester to aerobic digester at times of peak load. Under aerobic conditions the phosphate still present in the sludge water is fixed by the dephosphorylating bacteria and oxidation of nitrogen and oxygen-binding substances takes place.

Part of the sludge water which has gone through the aerobic processes is preferably returned to the variable digester. In this way better provision can be made for the changes in the composition of the waste water to be treated. This means that the waste water can be purified even better and more effectively, particularly as regards the removal of phosphates, nitrogen and BOCs. Good denitrification can be achieved by the mixing of the sludge water from the aerobic digester with the sludge water which goes into the variable digester, while at the same time BOCs are broken down under anoxic conditions or under conditions which are to a limited extent aerobic.

In a further preferred embodiment of the method according to the invention, after passage through an anoxic process in the variable digester the nature of the sludge water which has gone through the anoxic process is determined, after which the variable digester is used an anoxic or as an aerobic digester, as required, depending on the nature of this sludge water. If for example the content of BOCs, the oxygen content of the sludge water or the redox potential is high after passage through the variable digester (at times of peak load, for example, when large quantities of waste water have to be treated), the variable digester can be used as an anoxic digester, so that BOCs and nitrogen are better removed.

In addition, the oxygen content of the sludge water which has gone through the aerobic process is preferably determined after the aerobic process, after which the variable digester is used as an aerobic digester if the oxygen content is lower than a particular limit value, whereas the variable digester is used as an anoxic digester if the oxygen content is higher than this limit value. In this way it is possible continuously to determine, by a rapid method which is simple to carry out, whether the digester has to be used as an anoxic or as an aerobic digester.

An improvement in the sedimentation properties of the sludge is achieved by mixing the sludge water which has just gone through the anaerobic process in a mixing or contact tank with sludge originating from the sedimentation tank. This sludge has already passed through the entire treatment process. By mixing the returned sludge with the sludge water a readily sedimentable active sludge mixture is obtained as a result of the fact, for example, that fine and colloidal particles are captured by the sludge flocs in the return sludge.

In a preferred embodiment of the method according to the invention the waste water which is treated by means of the anaerobic process is mixed with sludge water originating from the anoxic digester, with the sludge water being divided by means of sedimentation into phosphate-rich water and sludge water, to be processed separately, after which the sludge water is passed through the anoxic process, the variable digester and the aerobic process.

A continuous process is obtained in which waste water is continuously added and from which purified water and sludge and a phosphate sludge, chemically bound if necessary, can be withdrawn. This process creates conditions which alternate in such a way that the DPB population present in the sludge water can optimally thrive and fix as much phosphate as possible in the sludge, at the same time as the nitrogen present is almost completely removed and any phosphate remaining can be chemically bound separately.

In a preferred embodiment of the method according to the invention, part of the phosphate-rich water is withdrawn to a sedimentation zone or stripper which forms part of a digester in which the sludge water goes through the anaerobic process, after which agents are then added to the phosphate-rich water to bind phosphates, after which the bound phosphates flocculate and settle out in a separate tank, a sludge condenser or sedimentation tank for example, after which the low-phosphate water thus obtained is conveyed to the first anoxic process. Because the phosphates are taken out of the water in a separate branch line of processes, the chemicals used cannot end up in the sludge which has to undergo the anoxic and aerobic processes. This means that it is not necessary for all the phosphates to be removed by the chemicals in the sedimentation tank. As a result, the amounts of chemicals used can be controlled very precisely, and it is even possible to use less than the required amount of chemicals if desired. This means that only a minimum of chemicals is needed.

Before the waste water is fed into the anaerobic process, at least part of the waste water is preferably fed into an installation for separating waste water and sludge, after which sludge is removed, while the waste water for further processing is fed to the first process. This has the advantage that an initial purification takes place already before the anaerobic process, so that the load on the biological process is reduced.

The invention will be explained in greater detail by means of the drawing. In this:
- Fig. 1 :: is a schematic illustration of a method according to the invention;
- Fig. 2 :: is a schematic arrangement in cross-section for executing a method according to the invention.

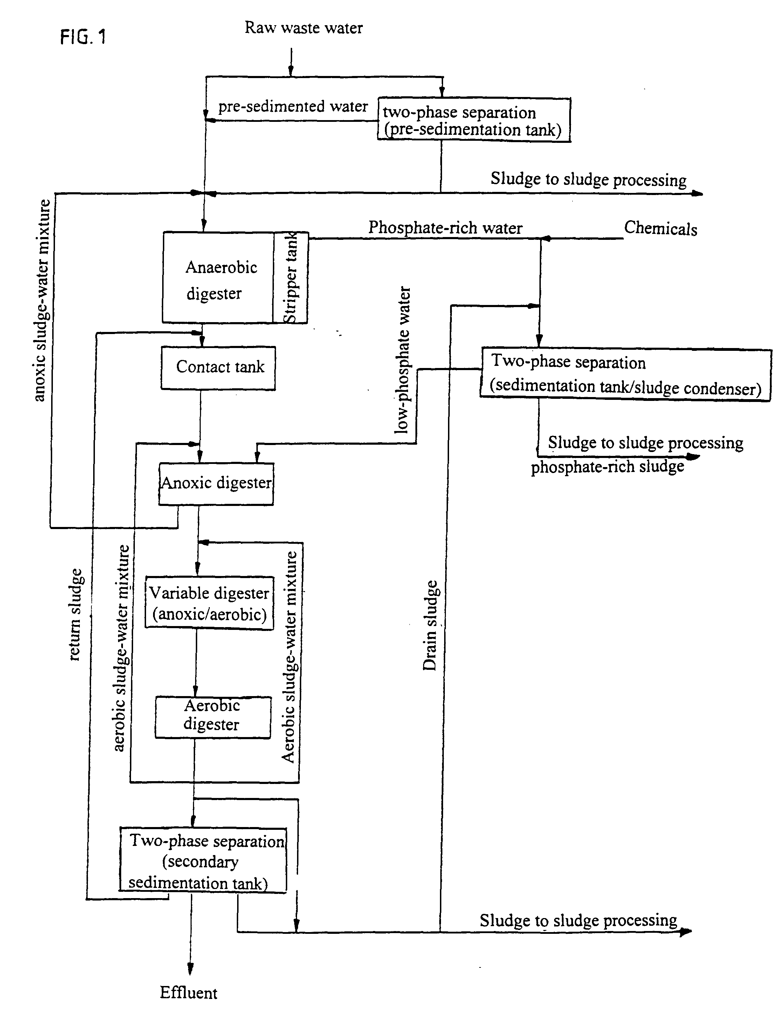

Fig. 1 gives in schematic form an example of the execution of a method according to the invention. In a preliminary sedimentation tank the waste water is separated into a sedimentable fraction or sludge and pre-sedimented waste water. The waste water is then mixed with anoxic sludge water which originates from an anoxic digester and which, up to and including this anoxic digester, has already passed through part of the treatment process. The mixture of waste water and anoxic sludge water is fed into an anaerobic digester, in which phosphates are given up by bacteria to the sludge water. In the low-oxygen environment, reduction processes can give rise to fatty acids which are taken up by the bacteria, while phosphates are given up by the bacteria to the water. In the anaerobic digester the sludge water is separated into a sedimenting layer of sludge water and an upper layer of phosphate-rich water.

The upper layer of water, which contains little sludge but is phosphate-rich, is pumped to a tank, for example a separate sedimentation tank or sludge condenser. In so doing, chemicals which chemically bind the phosphates are added to the phosphate-rich water. The precipitated phosphate-rich sludge with chemically bound phosphates is removed, preferably after condensing, and further processed in a sludge processing installation. The remaining low-phosphate water is added to the sludge water again further on in the treatment process.

The remaining sludge from the anaerobic digester is then conveyed to a mixing tank, which is also referred to as a contact tank. In the contact tank the sludge water is mixed with sludge which has already gone through the entire process. The sedimentation properties of the sludge are in this way greatly improved.

The sludge water is then conveyed to an anoxic digester. Here the sludge water from the contact tank is mixed with nitrate-rich sludge water which has already gone through several phases of the process and which originates from an aerobic digester. The low-phosphate water from the sludge condenser or sedimentation tank is also preferably added in this anoxic tank. Nitrates are removed from the sludge water by bacteria in this anoxic tank.

Part of the anoxic sludge water from this anoxic digester is fed again to the anaerobic tank.

The remaining sludge water originating from the anoxic digester is then mixed with nitrate-rich sludge water which has already gone through several phases of the process and which originates from an aerobic digester. This mixture is conveyed into a variable digester. This variable digester can be used as an anoxic digester or as an aerobic digester, as required, depending on the nature and the degree of pollution of the waste water to be treated.

The sludge water is then conveyed to an aerobic digester, after which a minimum content of nitrogen, phosphates and biochemical oxygen-consuming components is left in the sludge water. Depending on the process conditions and the mode of use of the variable digester, the process thus comprises either two anoxic processes followed by one aerobic process or one anoxic process followed by two aerobic processes. The number and execution of the anoxic and aerobic processes, as well as the return flows needed, can be further varied depending on the content of components to be removed.

Part of the sludge water is returned from the aerobic digester and then mixed with the sludge water originating from the contact tank, and then put into the anoxic digester, after which it goes through the subsequent processes again. Another part of the sludge water from the last aerobic digester is returned by mixing it with the anoxic sludge water originating from the anoxic digester and then putting it into the variable digester, after which it goes through the subsequent processes again. The remaining sludge water from the last aerobic digester is fed to a secondary sedimentation tank or two-phase separation. Here the sludge settles out and any floating layer is removed, giving clean water which by now has been purified to such an extent that it can be discharged to the surface water. Part of the separated sludge is returned to the contact tank, after which it goes through the subsequent processes again.

The remaining sludge is removed and given further treatment in a sludge processing installation, just like the sludge from the preliminary sedimentation tank and the phosphate-rich sludge with the chemically bound phosphates. If the sedimentation tank for sedimentation of the phosphate-rich sludge has been designed as a sludge condenser, part of the sludge from the last sedimentation tank can be fed into this sludge condenser.

Gases which may cause an environmental nuisance, such as unpleasant smells, are released in various of the processes forming part of the overall process. These gases are drawn off and treated in an air treatment installation.

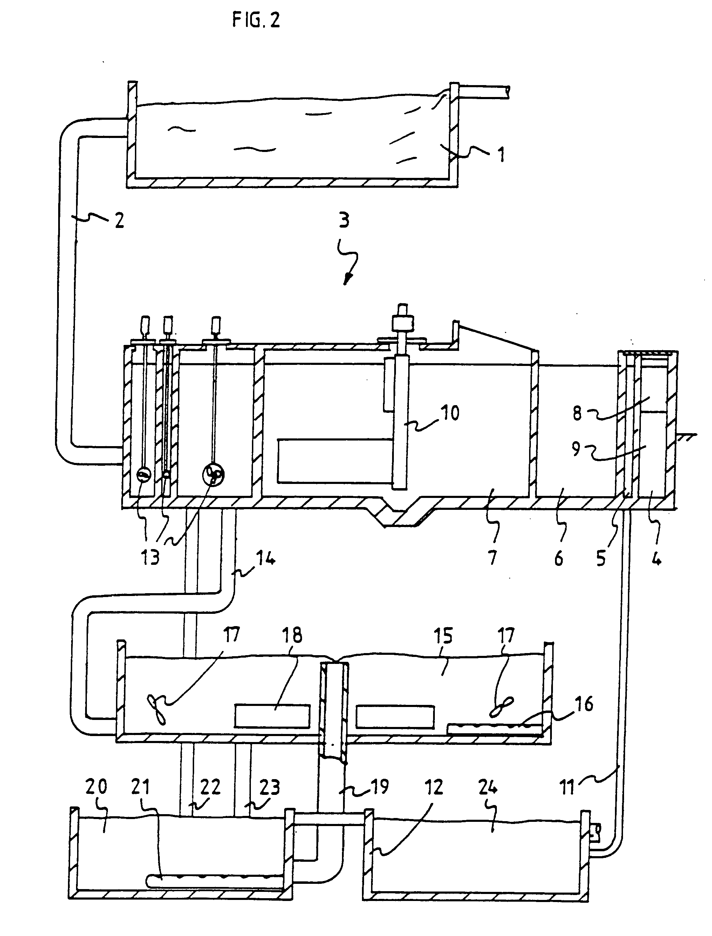

Fig. 2 shows schematically, in cross-section, a possible installation for carrying out the method described above. Raw waste water is pre-sedimented in a preliminary sedimentation tank, 1, after which the waste water is fed via a conduit, 2, to a cylindrical digester, 3, which is divided into three concentric annular digesters, 4, 5 and 6, which enclose a central, concentric cylindrical digester, 7. From the preliminary sedimentation tank, 1, the waste water is conveyed into the outermost annular tank, 4, which is used as an anaerobic digester. In the top of the anaerobic digester, 4, there are radial partitions, 8. The waste water which is located between the partitions, 8, does not flow around, and so the components present in the waste water settle out better. Through the anaerobic process which takes place in this digester, 4, the waste water separates into phosphate-rich water which is located between the partitions, 8, and sludge water which is located in the bottom part, 9, of the anaerobic digester, 4. The phosphate-rich water is drawn off or 'stripped' from the compartments between the partitions, 8, and conveyed to the central tank, 7. In this tank, 7, chemicals which bind the phosphates and cause them to settle out as phosphate-rich sludge, which is removed to a processing installation, are added to the waste water. In order to achieve good mixing and good running of the process, the central tank, 7, is provided with a stirrer, 10.

The sludge water from part 9 of the anaerobic digester, 4, is conveyed to the adjacent tank, 5, which serves as a contact tank, where the waste water is mixed with sludge which via a conduit, 11, is conveyed from a secondary sedimentation tank, 12, to the end of the treatment process. The waste water is then conveyed to the annular digester, 6, which is used as an anoxic digester. In this anoxic digester the sludge water is also mixed with low-phosphate water originating from the central tank, 7.

Propellers, 13, are fitted both in the anaerobic digester, 4, and in the contact tank, 5, and anoxic digester, 6. As a result of partial sedimentation the sludge content generally increases with depth. The variation in the sludge content with the depth of the tank, 4, 5 and 6, can be influenced by means of the speed regulation for these propellers, 13, whereby the sludge content of the entire system can also be influenced. Especially in the case of high digesters which are used as an anaerobic digester or as a contact tank, the release of phosphates by the bacteria is in this way favourably influenced, while in the case of high, anoxic digesters the uptake of phosphates by bacteria is favourably influenced.

From the anoxic digester, 6, the sludge water is conveyed via a conduit, 14, to a variable digester, 15, which depending on the process conditions can be operated either as an aerobic or as an anoxic digester, as desired. For this purpose the variable digester is provided both with an aeration installation, for example a bubble aeration installation, 16, and with propellers, 17, and a stirrer, 18. If the variable digester, 15, needs to be operated as an aerobic digester, the aeration installation, 16, is started up, so that sufficient oxygen is available for starting up an aerobic process. If the variable digester, 15, is operated as an anoxic digester, the aeration installation, 16, is shut down and the propellers, 17, and the stirrer, 18, are started up. The waste water is admitted near the side wall and removed in the middle of the variable digester, 15, by means of a submerged overflow consisting of a vertical conduit, 19, whose exit end is slightly below the level of the liquid. The sludge water is conveyed via the conduit, 19, to an aerobic digester, 20, which is also provided with an aeration installation, 21. From the aerobic digester there are return flows via the conduits 22 and 23 to the anoxic tank, 6, and to the variable digester, 15, respectively. Another part is conveyed to a secondary sedimentation tank, 24, where the sludge settles out and where clean, treated water is drawn off and discharged to the surface water. Part of the sludge from this sedimentation tank is returned via the conduit 11 to the contact tank, 5, while another part of the sludge is removed to a processing installation.

It is remarked that a return line for transfer of sludge water from the anoxic process back to the anaerobic process is not depicted in figure 2.

## Claims

1. Method for the treatment of waste water in which the waste water consecutively goes through different processes, including an anaerobic process and an anoxic process, wherein part of the water which has gone through the processes is conveyed to a sedimentation tank, in which the water is separated by sedimentation into sludge and purified water or effluent, wherein the processes to be gone through are carried out with the aid of a population of bacteria which mainly consists of denitrifying phosphate-removing bacteria, or DPBs,
**characterized in that**
- after being treated by means of the anoxic process the water is treated by means of one or more aerobic processes (15,20),
- part of the water which has gone through the aerobic process is returned to the anoxic process (6) and part of that water is conveyed to the sedimentation tank (24),
- wherein after the anoxic process (6) at least a part of the water is returned from the anoxic process and mixed with the waste water and passed through the previous processes, starting with the anaerobic process, again,
- wherein part of the water originating from the anoxic processes (6) is fed to a variable digester (15) which, depending on the nature and degree of pollution of the waste water, is used either as an anoxic or as an aerobic digester, after which the water is conveyed from the variable digester to the aerobic process (20),
- with the composition of the water in the various processes being maintained in such a state, by means of said return flows of the water to previous processes, that the DBP population achieves an optimum size, while through the mentioned return flows DPBs, depending on the extent to which they are saturated in one process, are passed on or returned to another process.

2. Method according to claim 1, **characterized in that** part of the water which has gone through the aerobic processes (20) is returned to the variable digester (15).

3. Method according to claim 1 or 2, **characterized in that** after passage through an anoxic process (6) in the variable digester (15) the content of BOC's (Biochemical Oxygen Consuming units), the oxygen content and/or the redox potential of the water which has gone through the anoxic process is determined, after which the variable digester (15) is used as an anoxic or as an aerobic digester, as required, depending on the outcome of said determination.

4. Method according to claim 3, **characterized in that** after the aerobic process (15, 20) the oxygen content of the water which has gone through the aerobic process is determined, after which the variable digester (15), as required, is used as an aerobic digester if the oxygen content is lower than a particular limit value, whereas the variable digester is used as an anoxic digester if the oxygen content is higher than this limit value.

5. Method according to any one of the preceding claims, **characterized in that** after the anaerobic process the water is added to a mixing tank or contact tank (5), with agents being added in order to improve the sedimentation properties of sludge present in the water.

6. Method according to claim 5, **characterized in that** the method for improving the sedimentation properties of the sludge water in the contact tank involves the addition of sludge originating from the sedimentation tank (24).

7. Method according to any one of the preceding claims, **characterized in that** when the waste water is treated by means of said anaerobic process (4), the water is divided by means of sedimentation into phosphate-rich water and sludge water, to be processed separately, and the sludge water is passed through the anoxic process (6), the variable digester (15) and the aerobic process (20).

8. Method according to claim 7, **characterized in that** part of the phosphate-rich water is withdrawn to a sedimentation zone or stripper (8) which forms part of a digester (4) in which the sludge water passes through the said anaerobic process, after which agents are then added to the phosphate-rich water to bind the phosphates, after which the bound phosphates flocculate and settle out in a separate tank, a sludge condenser or sedimentation tank for example, after which the low-phosphate water thus obtained is conveyed to the anoxic process (6), being mixed with the sludge water.

9. Method according to claim 8, **characterized in that** the phosphate-rich water and the agents for binding the phosphates are also mixed with sludge originating from the sedimentation tank (24), after which the mixture is condensed.

10. Method according to one of the preceding claims, **characterized in that** before the waste water is fed into the anaerobic process (4), at least part of the waste water is fed into an installation for separating waste water and sludge, after which sludge is removed, while the waste water for further processing is fed to the anaerobic process.

## Patentansprüche

1. Abwasserreinigungsverfahren, worin das Abwasser aufeinanderfolgend durch verschiedene Prozesse geht, einschließlich eines anaeroben Prozesses und eines anoxischen Prozesses, worin Teil des Wassers, das durch die Prozesse gegangen ist, zu einem Absetzbehälter gefördert wird, worin das Wasser durch Absetzen in Schlamm und gereinigtes Wasser oder Abwasser geteilt wird, wobei die hindurchzugehenden Prozesse mit Hilfe einer Population von Bakterien, hauptsächlich bestehend aus denitrifizierenden Phosphat-entfernenden Bakterien, oder DPBs, ausgeführt werden, **dadurch gekennzeichnet, daß**
- nachdem durch den anoxischen Prozeß behandelt zu sein, das Wasser durch einen oder mehrere aerobe Prozesse (15,20) behandelt wird,
- Teil des durch den aeroben Prozeß gegangen Wassers zu dem anoxischen Prozeß (6) zurückkehrt und Teil von diesem Wasser zu dem Absetzbehälter (24) gefördert wird,
- wobei nach dem anoxischen Prozeß (6) zumindest ein Teil des Wassers von dem anoxischen Prozeß zurückkehrt und mit dem Abwasser gemischt wird und durch die vorhergehenden Prozesse, wieder mit dem anaeroben Prozeß anfangend, geführt wird,
- wobei Teil des Wassers aus den anoxischen Prozessen (6), an einen variablen Reaktor (15) zurückgeleitet wird, welcher, abhängig von dem Art und Maß von Verunreinigung des Abwassers, entweder als ein anoxischer oder als ein aerober variabler Reaktor benutzt wird, worauf das Wasser von dem variablen Reaktor zu dem aeroben Prozeß (20) gefördert wird,
- wobei die Zusammensetzung des Wassers in den verschiedenen Prozessen durch die Zurückflüsse des Wassers zu hervorgehenden Prozessen in einem derartigen Zustand aufrechterhalten wird, daß die DBP Population eine optimale Größe erreicht, während durch die genannten Zurückflüsse, DBP's, abhängig von dem Sättigungsmaß in einem Prozeß, zu einem anderen Prozeß weitergeführt werden oder zurückkehren.

2. Verfahren nach Anspruch 1, **dadurch gekennzeichnet, daß** Teil des durch die aeroben Prozesse (20) gegangenen Wassers zu dem variablen Reaktor (15) zurückkehrt.

3. Verfahren nach Anspruch 1 oder 2, **dadurch gekennzeichnet, daß** nach Durchfluß durch einen anoxischen Prozeß (6) in dem variablen Reaktor (15), der Gehalt von BOC's (Biochemical Oxygen Consuming Units = biochemische Sauerstoff verbrauchende Einheiten), der Sauerstoffgehalt und/oder das Redoxpotential des durch den anoxischen Prozeß gegangenen Wassers festgestellt wird, worauf der variable Reaktor (15) als ein anoxischer oder als ein aerober variabler Reaktor, wie erforderlich, abhängig von dem Ergebnis der Feststellung, benutzt wird.

4. Verfahren nach Anspruch 3, **dadurch gekennzeichnet, daß** nach dem aeroben Prozeß (15,20) der Sauerstoffgehalt des durch den aeroben Prozeß gegangenen Wassers festgestellt wird, worauf der variable Reaktor (15), wie erforderlich, als ein aerober variabler Reaktor benutzt wird, falls der Sauerstoffgehalt niedriger ist als ein bestimmter Grenzwert, während der variable Reaktor als ein anoxischer variabler Reaktor benutzt wird, falls der Sauerstoffgehalt höher ist als dieser Grenzwert.

5. Verfahren nach irgendeinem der vorhergehenden Ansprüche, **dadurch gekennzeichnet, daß** nach dem anaeroben Prozeß das Wasser einem Mischtank oder einem Kontakttank (5) zugefügt wird, wobei Wirkstoffe zugefügt werden, um die Absetzeigenschaften von dem in dem Wasser vorhandenen Schlamm zu verbessern.

6. Verfahren nach Anspruch 5, **dadurch gekennzeichnet, daß** das Verfahren zum Verbessern der Absetzeigenschaften von dem Schlammwasser in dem Kontakttank die Hinzufügung von Schlamm aus dem Absetzbehälter (24) umfaßt.

7. Verfahren nach irgendeinem der vorhergehenden Ansprüche, **dadurch gekennzeichnet, daß** wenn das Abwasser durch den anaeroben Prozeß (4) behandelt wird, das Wasser durch Absetzen in phosphatreiches Wasser und Schlammwasser geteilt wird, um separat behandelt zu werden, und das Schlammwasser durch den anoxischen Prozeß (6), den variablen Reaktor (15) und den aeroben Prozeß (20) geführt wird.

8. Verfahren nach Anspruch 7, **dadurch gekennzeichnet, daß** Teil des phosphatreichen Wassers zu einer zu einem variablen Reaktor (4) gehörenden Absetzzone oder Abstreifer (8), zurückgezogen wird, wobei das Schlammwasser durch den anaeroben Prozeß fließt, worauf dem phosphatreichen Wasser Wirkstoffe zugefügt werden, um die Phosphate zu binden, worauf die gebundenen Phosphate in einem getrennten Tank, zum Beispiel einem Schlammkondensator oder einem Absetzbehälter, ausflocken und sich absetzen, worauf das also erhaltene phosphatarme Wasser zu dem anoxischen Prozeß (6) gefördert wird, und mit dem Schlammwasser gemischt wird.

9. Verfahren nach Anspruch 9, **dadurch gekennzeichnet, daß** das phosphatreiche Wasser und die Wirkstoffe zum Binden der Phosphate auch mit aus dem Absetzbehälter (24) entstandenen Schlamm gemischt werden, worauf die Mischung eingedickt wird.

10. Verfahren nach irgendeinem der hervorgehenden Ansprüche, **dadurch gekennzeichnet, daß** bevor das Abwasser in den anaeroben Prozeß (4) zurückgeleitet wird, zumindest Teil des Abwassers in eine Installation zum Trennen von Abwasser und Schlamm zurückgeleitet wird, worauf der Schlamm entfernt wird, während das Abwasser für weitere Behandlung zu dem anaeroben Prozeß zurückgeleitet wird.

## Revendications

1. Procédé de traitement d'eau résiduaire, dans lequel l'eau résiduaire est soumise consécutivement à différents processus, comprenant un processus anaérobie et un processus anoxique, dans lequel une partie de l'eau qui a été soumise aux processus est transportée jusqu'à un bassin de sédimentation, dans lequel l'eau est séparée par sédimentation en boue et en eau purifiée ou effluent, dans lequel les processus auxquels l'eau doit être soumise sont exécutés avec l'aide d'une population de bactéries, qui consiste principalement en bactéries dénitrifiantes destinées à éliminer les phosphates, ou BDP,
**caractérisé en ce que**
- après avoir été traitée au moyen du processus anoxique, l'eau est traitée au moyen d'un ou de plusieurs processus aérobie (15, 20),
- une partie de l'eau qui a été soumise au processus aérobie est renvoyée au processus anoxique (6), et une partie de cette eau est transportée jusqu'au bassin de sédimentation (24),
- dans lequel, après le processus anoxique (6), au moins une partie de l'eau est renvoyée du processus anoxique et mélangée avec l'eau résiduaire et est soumise aux processus précédents, en commençant par le processus anaérobie, à nouveau,
- dans lequel une partie de l'eau provenant des processus anoxiques (6) alimente un digesteur variable (15) qui, en fonction de la nature et du degré de pollution de l'eau résiduaire, est utilisé soit comme digesteur anoxique, soit comme digesteur aérobie, après quoi l'eau est transportée du digesteur variable vers le processus aérobie (20),
- la composition de l'eau dans les différents processus étant maintenue dans un état tel, au moyen desdites restitutions de l'eau vers les processus précédents, que la population de BDP atteint une taille optimale, alors que, par l'intermédiaire des restitutions mentionnées, les BDP, en fonction de la mesure suivant laquelle elles sont saturées dans un processus, passent à un autre processus ou sont renvoyées à celui-ci.

2. Procédé selon la revendication 1, **caractérisé en ce qu'**une partie de l'eau qui a été soumise aux processus aérobie (20) est renvoyée au digesteur variable (15).

3. Procédé selon la revendication 1 ou 2, **caractérisé en ce que**, après le passage par un processus anoxique (6) dans le digesteur variable (15), la teneur en unités biologiques consommatrices d'oxygène (UCO), la teneur en oxygène et/ou le potentiel redox de l'eau qui a été soumise au processus anoxique est déterminé(e), après quoi le digesteur variable (15) est utilisé comme digesteur anoxique ou comme digesteur aérobie, selon les besoins, en fonction du résultat de ladite détermination.

4. Procédé selon la revendication 3, **caractérisé en ce que**, après le processus aérobie (15, 20), la teneur en oxygène de l'eau qui a été soumise au processus aérobie est déterminée, après quoi le digesteur variable (15), selon les besoins, est utilisé comme digesteur aérobie, si la teneur en oxygène est inférieure à une valeur limite particulière, alors que le digesteur variable est utilisé comme digesteur anoxique, si la teneur en oxygène est supérieure à cette valeur limite.

5. Procédé selon l'une quelconque des revendications précédentes, **caractérisé en ce que**, après le processus anaérobie, l'eau est ajoutée à un bassin mélangeur ou bassin de contact (5), des agents étant ajoutés afin d'améliorer les propriétés de sédimentation de la boue présente dans l'eau.

6. Procédé selon la revendication 5, **caractérisé en ce que** le procédé d'amélioration des propriétés de sédimentation de l'eau boueuse dans le bassin de contact implique l'ajout de boue provenant du bassin de sédimentation (24).

7. Procédé selon l'une quelconque des revendications précédentes, **caractérisé en ce que**, lorsque l'eau résiduaire est traitée au moyen dudit processus anaérobie (4), l'eau est divisée, au moyen de la sédimentation, en eau riche en phosphates et en eau boueuse, pour être traitée séparément, et l'eau boueuse est soumise au processus anoxique (6), traverse le digesteur variable (15) et est soumise au processus aérobie (20).

8. Procédé selon la revendication 7, **caractérisé en ce qu'**une partie de l'eau riche en phosphates est soutirée vers une zone de sédimentation ou rectificateur (8) qui fait partie d'un digesteur (4), dans lequel l'eau boueuse est soumise audit processus anaérobie, après quoi des agents sont ensuite ajoutés à l'eau riche en phosphates pour lier les phosphates, après quoi les phosphates liés floculent et se déposent dans un bassin séparé, un condenseur de boue ou un bassin de sédimentation par exemple, après quoi l'eau pauvre en phosphates ainsi obtenue est transportée jusqu'au processus anoxique (6), et est mélangée avec l'eau boueuse.

9. Procédé selon la revendication 8, **caractérisé en ce que** l'eau riche en phosphates et les agents de liaison des phosphates sont également mélangés avec la boue provenant du bassin de sédimentation (24), après quoi le mélange est condensé.

10. Procédé selon l'une quelconque des revendications précédentes, **caractérisé en ce que**, avant que l'eau résiduaire n'alimente le processus anaérobie (4), au moins une partie de l'eau résiduaire alimente une installation destinée à séparer l'eau résiduaire et la boue, après quoi la boue est enlevée, alors que l'eau résiduaire destinée à un nouveau traitement alimente le processus anaérobie.
